(19) Europäisches Patentamt
European Patent Office
Office européen des brevets

(11) EP 3 736 385 A1

(12) EUROPEAN PATENT APPLICATION

(43) Date of publication:
11.11.2020  Bulletin 2020/46

(51) Int Cl.:
E03B 7/02 (2006.01)    E03B 7/07 (2006.01)

(21) Application number: 19173583.6

(22) Date of filing: 09.05.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Invenio Systems Ltd
Durham DH1 1TW (GB)

(72) Inventors:
• Tooms, Stephen
  Durham, DH1 1TW (GB)
• Trow, Stuart
  Durham, DH1 1TW (GB)

(74) Representative: Vinsome, Rex Martin
Urquhart-Dykes & Lord LLP
12th Floor
Cale Cross House
156 Pilgrim Street
Newcastle-upon-Tyne NE1 6SU (GB)

(54) METHODS FOR LOCATING ANOMALOUS FLOW IN A FLUID DISTRIBUTION NETWORK

(57)     A method for locating anomalous water flow (L) in a water distribution network (10, 100) is disclosed. A flow value representative of the anomalous fluid flow is allocated (212) to at least one node (14, 104) of a computer-implemented model representative of the water distribution network. Calculated temperatures are determined (212) from the model at a plurality of locations (24, 106) of the network based on the allocation of the flow value. The calculated temperatures are compared (212) with measured temperatures at the plurality of locations and, based on the comparison, at least one part of the network to search (214) for the anomalous fluid flow is identified.

FIG.1

EP 3 736 385 A1

**Description**

The present invention relates to a method for locating anomalous flow in a fluid distribution network by comparing measured and calculated temperatures of the fluid in the network and relates particularly, but not exclusively, to a method for identifying the most likely location of a leak in a district metered area of a water distribution network and to a method for determining an optimal set of locations in which to place thermal monitoring equipment for locating a leak.

A mathematical model of a water distribution network, or of part of a water distribution network such as a district metered area, can be constructed with knowledge of the following parameters: pipe lengths, pipe internal diameters, pipe materials and pipe inter-connections, control valves, meters, pumps, hydrants and customer locations. The model represents pipes of the network connected at nodes. Control valves, meters, hydrants, pumps, and pipe branches may be located at the nodes. Customer data along with flow data from meters within the network are used to allocate customers to nodes of the model and to estimate customer demand as a function of time. The model can be calibrated against real data from flow meters and pressure loggers installed in the network by adjusting parameters such as pipe roughness, pipe size and control valve status in the model.

In the context of a water distribution network, a flow of water out of a part of the network is known as a demand. Demands include use of the water by customers connected to the network, leakage, and other flows, such as the use of hydrants connected to the network.

The demands can be considered to originate from one or more nodes of the network, and therefore can be allocated to nodes of the model representing the network. Typically, leakage is allocated to a node in the model in proportion to the number of customers connected to that node.

Estimated demands and hydraulic characteristics of the pipes of the network can be used to calculate an expected pressure at each node and a flow in each pipe in the network in a given period, and thereby the model can be used to estimate the locations of leaks and sources of other unexpected changes in demand throughout the network. Leaks and unexpected changes in demand are referred to hereinafter as anomalous flows.

According to a first aspect of the present invention, there is provided a method for locating anomalous fluid flow in a fluid distribution network, the method comprising the steps of:

(i) allocating a flow value representative of the anomalous fluid flow to at least one node of a computer-implemented model representative of the fluid distribution network;

(ii) determining from the model calculated temperatures at a plurality of locations of the network based on the allocation of step (i);

(iii) comparing the calculated temperatures with measured temperatures at the plurality of locations; and

(iv) based on the comparison, identifying at least one part of the network to search for the anomalous fluid flow.

By basing the determining on temperature measurements, which are easier to determine than flow measurements, this provides the advantage of making the method easier to implement.

The method may further comprise the steps of: calibrating the model for thermal resistivity of the ground in which the network is installed; determining from the calibrated model calculated temperatures at the plurality of locations; comparing the calculated temperatures with measured temperatures at the plurality of locations; and carrying out steps (i) to (iv) based on an outcome of the comparison.

This enables the method to be automated by only carrying out steps (i) to (iv) if a predefined condition is satisfied.

The comparison may comprise calculating at least one difference between at least one calculated value and at least one measured value and comparing the at least one difference to a predetermined threshold value.

This provides a mechanism for tuning the sensitivity of the method to differences between calculated and measured values, thereby improving the versatility of the method.

The calculation of the difference may comprise calculating an average calculated value and an average measured value.

This provides a way of reducing the impact of possible errors or imperfections in the model on the determination of a likely anomalous flow source.

The predetermined threshold value may be in the range 0.1 to 1.0 degrees Celsius.

The method may comprise the step of altering a physical status of at least one portion of the network based on the outcome of the comparison.

This enables the model to be brought into closer conformance with the network, thereby increasing the accuracy of the method.

The comparison of step (iii) may provide a plurality of outcomes of the comparison and the method may further comprise the steps of: ordering the outcomes based on a likelihood of a source of the anomalous flow being in locations corresponding to respective outcomes to provide a ranking; and prioritising the parts of the network for search based on the ranking.

This increases the likelihood that a source of anomalous flow will be found for a given model of the network and eliminates the need to run the model more than once before searching more than one part of the network.

The anomalous value may be representative of a change in in-flow into the fluid distribution network.

This prompts a user to carry out the method without having to have direct knowledge of an anomalous flow occurring, thereby increasing the speed with which a location of a source of anomalous flow may be found.

The method may further comprise the following steps prior to step (iii):

(v) allocating a flow value representative of normal demand to at least one node of the model; and
(vi) determining from the model calculated temperatures at a plurality of locations of the network based on the allocation of step (v),

wherein the comparison of step (iii) includes the calculated temperatures of steps (ii) and (vi) and respective measured values.

This provides an accurate and robust way of determining a location of a source of anomalous flow once a change in-flow has been identified.

The comparison may comprise the steps of: calculating differences between the calculated values of steps (ii) and (vi) to obtain a set of calculated temperature differences; calculating differences between the respective measured values to obtain a set of measured temperature differences; comparing the calculated set and the measured set; and carrying out step (iv) based on the comparison of the two sets.

This increases the accuracy of the method.

According to a second aspect of the present invention, there is provided a method for identifying optimal locations of monitoring points in a fluid distribution network, the method comprising the steps of:

(i) determining from a computer-implemented model representative of the fluid distribution network first calculated temperatures at a plurality of nodes of the network;

(ii) allocating to at least one node of the model a first flow value;

(iii) determining from the model second calculated temperatures at the plurality of nodes based on the allocation of step (ii);

(iv) allocating to at least one node of the model a second flow value;

(v) determining from the model third calculated temperatures at the plurality of nodes based on the allocation of step (iv);

(vi) calculating a plurality of values associated with a respective plurality of locations of monitoring points based on the first, second, and third calculated temperatures; and

(vii) selecting, based on the values, locations for monitoring points.

For a given set of technical constraints, such as a given number of temperature monitoring devices available for use and time limits associated with installation of the devices, this method provides the advantage of enabling a set of locations to be efficiently determined in the network for the devices to be installed which has an increased likelihood of being able to accurately locate a source of anomalous flow once installed.

The method may further comprise the step of installing temperature monitoring equipment at the monitoring points of the optimal set.

Step (vi) may comprise calculating error scores of each candidate set, wherein each error score is indicative of an ability of the respective candidate set to determine a location of a source of anomalous flow in the network, and wherein the selection of step (vii) is based on the error scores.

This provides a quantitative measure of each candidate set's ability to locate sources of anomalous flow in different scenarios, thereby providing more information to a user and correspondingly improving the user's ability to determine where to install the devices for a given set of constraints.

Step (i) may comprise allocating to at least one node a flow value representative of a normal demand of the network.

According to a third aspect of the present invention, there is provided a computer system configured to carry out any method defined above.

The present invention will now be described, by way of example only and not in any limitative sense, with reference to the following drawings, in which:

Figure 1 is a schematic representation of a water distribution network for which one or more embodiments of the invention may be used;

Figure 2 is a flowchart of a first embodiment of the invention;

Figure 3 is a flowchart of a second embodiment of the invention;

Figure 4 is a flowchart of a third embodiment of the invention; and

Figure 5 is a schematic representation of a water distribution network illustrating locations of a set of monitoring points of a fourth embodiment of the present invention.

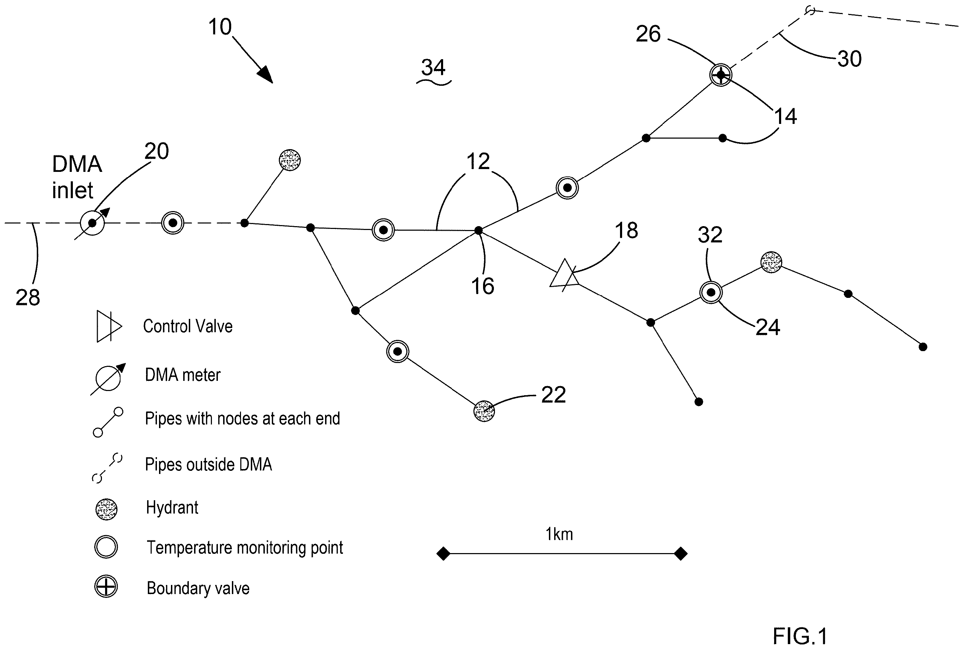

Referring to Figure 1, a model of a fluid distribution network where the network is a water distribution network 10 in the form of a district metered area 10 is shown comprising a plurality of pipes 12 and a plurality of nodes 14. Several nodes 14 are shown comprising junctions 16 joining two or more pipes together. Other nodes 14 are shown comprising a control valve 18, a district metered area inlet meter 20, hydrants 22, temperature monitoring points 24, and a boundary valve 26. An inlet pipe 28 and outlet pipes 30, which are not considered part of the district metered area 10, are also shown.

Water flows through the inlet pipe 28 and through the inlet meter 20 into the district metered area 10. Water can flow out of the area 10 via the hydrants 22, via the boundary valve 26, and via any node 14 to which one or more customers (not shown) is connected. No leak or other anomalous flow source is illustrated in Figure 1, but it is to be understood that an anomalous flow source may include, among other things, a fracture in a pipe, an imperfect junction between two or more pipes, a broken hydrant or valve, a theft of water from a hydrant, and an unexpected change in usage by a customer.

The temperature monitoring points 24 of the model of Figure 1 indicate the installation of temperature measurement devices 32 at corresponding locations of the district metered area 10. Temperature measurement devices 32 will from hereinafter be referred to as thermometers for brevity.

One or more thermometers 32 may be installed in the ground in the proximity of a pipe 12 or pipe fitting, at an outer surface of a pipe 12 or stop tap, or in a boundary box or stop tap chamber to enable an indirect measurement of water temperature within a pipe 12 to be made. One or more thermometers 32 may be installed within a pipe or pipe fitting to enable a direct measurement of the water temperature to be made.

Where an indirect temperature measurement is made, a correction is applied to the measurement to increase the accuracy of the measurement. The correction takes into account the thermal characteristics of the materials between the thermometer 32 and the water being measured. The materials may include the ground 34, the pipe 12, thermal insulation around the pipe 12, and other fittings. The thermal characteristics include the thermal conductivity and dimensions of the materials between the thermometers 32 and the water.

In an embodiment, in addition to recording a measured temperature of the water in a nearby pipe 12, each thermometer 32 at each monitoring point 24 is configured to record the temperature of the ground 34 near the pipe 12 to determine an ambient temperature at that monitoring point 24. Additionally, or alternatively, further thermometers 32 are installed for measuring the ambient temperature. The measurement of ambient temperature is made at a distance from the pipe 12 that the water in the pipe 12 does not influence the measurement. In an embodiment, this distance is at least fifty centimetres. In a further embodiment, the thermometers 32 measuring the ambient temperature are thermally isolated from the network 10 but are in contact with the ground 34. Alternatively, or additionally, the ambient temperature is inferred from weather records.

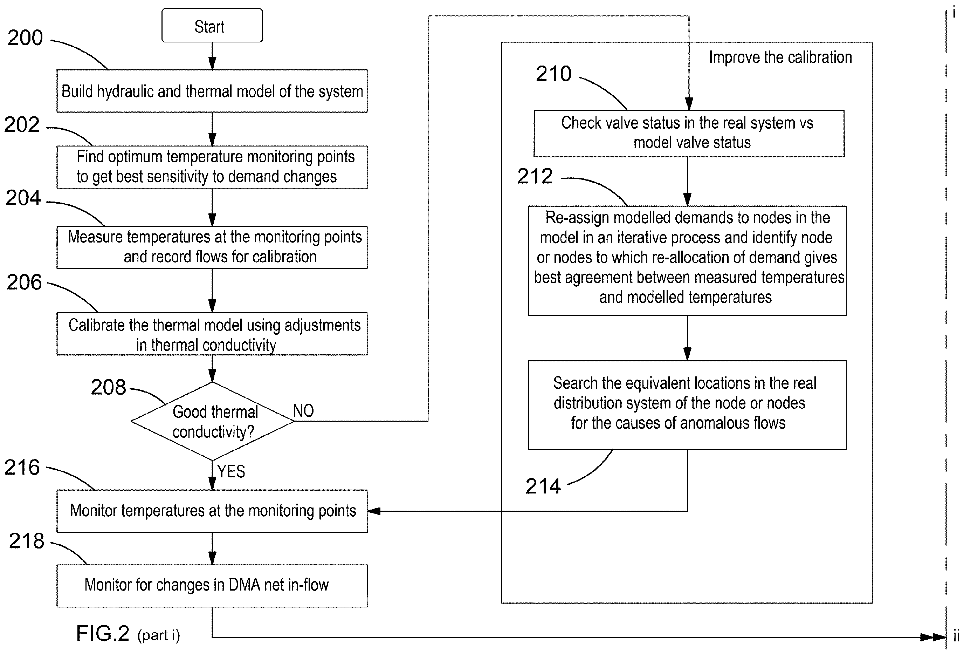

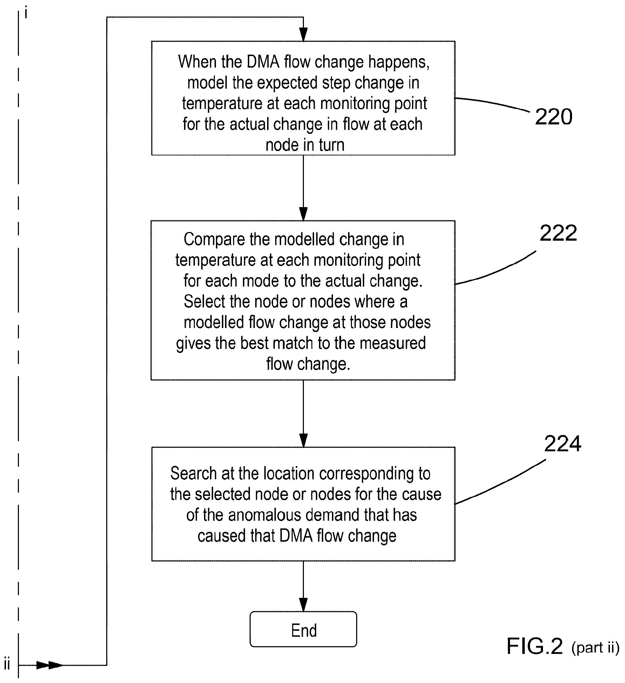

Referring to Figures 2 to 5, a method of determining a location of anomalous water flow using a thermal model of the district metered area will now be described.

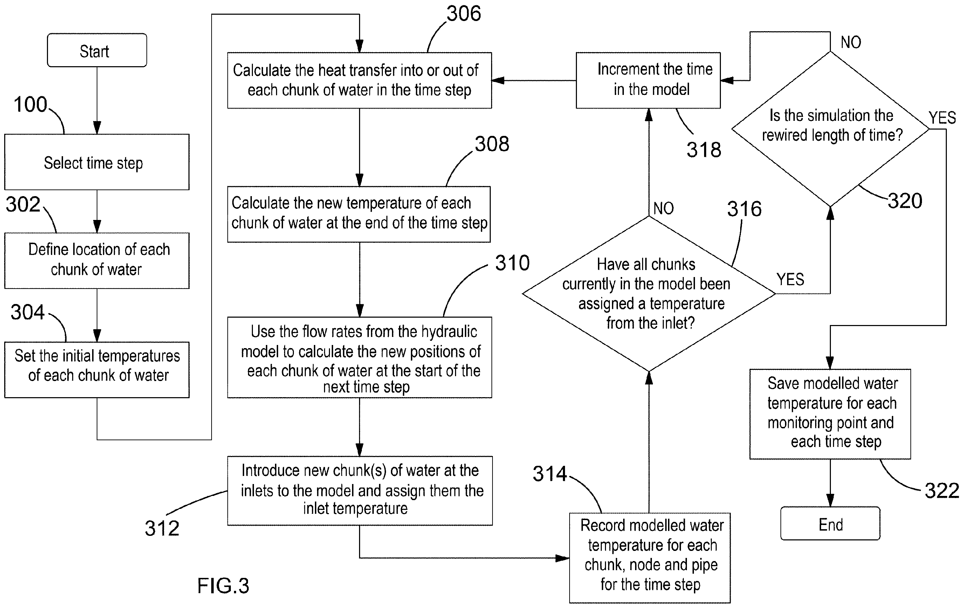

First, and with reference to Figures 2 and 3, the thermal model of the network under consideration (10, 100) is created 200. Step 200 of Figure 2 comprises the steps of Figure 3.

A time step or increment ($\delta t$) is chosen 300. This will be typically one minute but can be between twenty seconds and five minutes.

For each time step and each pipe of the model, the water inside the pipe is divided into chunks of a small volume occupying a respective location 302 each with its own temperature 304. These volumes are equal to the product of the flow rate calculated with a hydraulic model and the time step $\delta t$.

The directly or indirectly measured ground temperature away from the pipe, the thermal conductivity and specific heat capacity of the ground, the fluid flow in the pipe, the thermal conductivity of the pipe material, the pipe dimensions, the depth of burial of the pipe and the velocity of the water in the pipe modelled in the hydraulic model are used to calculate the heat transfer coefficient of heat into or out of the water. The heat transfer into or out of each chunk of water is calculated in the time step 306.

The new temperature of each chunk of water in the modelled pipes is calculated after the time step $\delta t$ 308.

The position of each chunk of water is calculated at the end of the time step and the calculation is repeated for the new position 310.

When chunks of water are calculated to arrive at a junction, new chunks of water are produced with volumes in proportion to the flow rate in each respective branch having the same temperature, at the beginning of the time step, as that of the chunk of water that arrived at the branch in the model at the end of the previous time step. The result of this process will be a calculated temperature of water in each pipe for each time step. Also, new chunks of water are introduced at the inlets to the model and an inlet temperature 312 is assigned to them.

After each time step, the calculated new water temperature and calculated new location are recorded for each chunk of water in the model 314.

The model is run (316, 318, 320) to the point where all the chunks of water still in the modelled pipes have had a temperature assigned to them from the inlet temperature and then continued until there is enough saved modelled temperature data after that point to use for comparison to the real data. In an embodiment, this takes twenty-four hours of model time. The twenty-four hours-worth of data is used for comparison to real data and it may take twenty-four hours in model time for all chunks of water to be allocated a temperature at the inlet, so at least at least forty-eight hours of model time may be required.

Calculated temperatures for each part of the distribution network and each time step are recorded 322. The thermal model of the network is thus created.

Next, an optimal set of temperature monitoring points is determined. Having temperature measurement apparatuses installed at monitoring points in the network enables modelled temperatures to be compared to actual temperature in the pipes of the network. An optimal set of monitoring points is one which includes the lowest number of installed measuring apparatuses which can detect and localise flow changes.

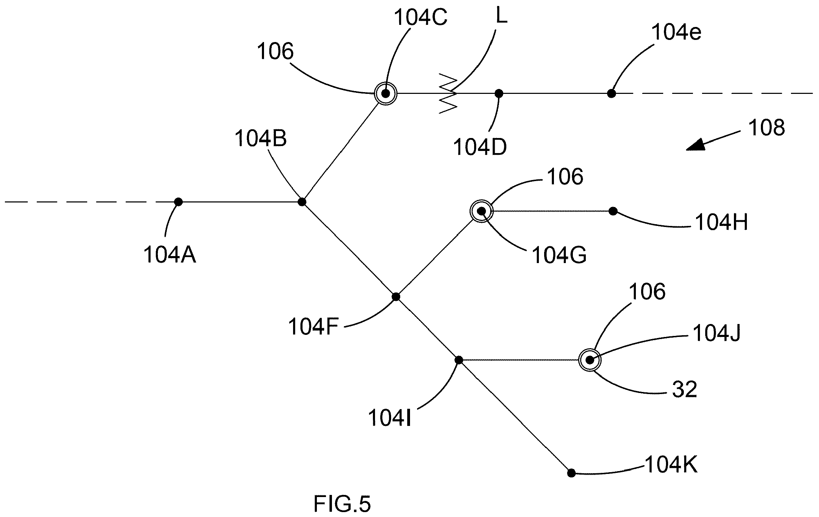

The method for determining the optimal set of monitoring points will now be described with reference to Figure 5, which shows a schematic representation of a network 100 having eleven nodes 104A to 104K connected by pipes 102, and a leak L in the pipe joining nodes 104C and 104D. Three monitoring points 106 of candidate set 108 are shown at nodes 104C, 104G, and 104J. Each monitoring point comprises a thermometer 32.

The temperature at every node 104 in the network 100 is calculated in the model having a normal demand assigned. In an embodiment, the normal demand is the demand measured at a time of minimum customer demand, typically 03:30am.

Then, for each node 104 in the model in turn, the demand is increased by a chosen value, the model is rerun, and the temperature at every node 104 is calculated and recorded. The result of this process is an array of temperature differences which is arranged in a square matrix having a number of rows equal to the number of nodes in the model. Each element of the matrix is a calculated difference in temperature at a node when there is increased demand at another node or itself. This matrix is known as a sensitivity matrix. For a model comprising $m$ nodes (for the network 100 shown in Figure 5, $m = 11$), the sensitivity matrix is calculated as described below.

The calculated temperature at node $i$ at a time of minimum customer demand is denoted $\hat{T}_i$. The calculated temperature at node $i$ when there is a simulated flow increase of magnitude $f_j$ at node $j$ is denoted $\hat{T}_i^{f_j}$. The sensitivity residual at node $i$ when there is a flow increase in *node j* is then given by $\hat{T}_i^{f_j} - \hat{T}_i$. The sensitivity vector $s_j$ for flow increase $f_j$ is then:

$$s_j = \begin{bmatrix} \hat{T}_1^{f_j} - \hat{T}_1 \\ \vdots \\ \hat{T}_m^{f_j} - \hat{T}_m \end{bmatrix}$$

Sensitivity vectors are calculated for simulated flow increases in all nodes $m$ in the network. The magnitude of $f_j$ is the same for all nodes $j$. The sensitivity matrix is an $m \times m$ matrix with sensitivity vectors as its columns, and is given by:

$$S = \begin{bmatrix} s_1 & \cdots & s_m \end{bmatrix}$$

This process is repeated with a different-sized increase in demand at each node. The resulting matrix in this case is known as a "residual matrix". For a model comprising $m$ nodes, the residual matrix is calculated as described below.

Residual vectors of a residual matrix are calculated in the same way as sensitivity vectors of the sensitivity matrix, but instead using a different sized increase in simulated demand $f_k$, where $f_k \neq f_j$. A residual vector, denoted $r_k$, is given by:

$$r_k = \begin{bmatrix} \hat{T}_1^{f_k} - \hat{T}_1 \\ \vdots \\ \hat{T}_m^{f_k} - \hat{T}_m \end{bmatrix}$$

The residual matrix is an $m \times m$ matrix with residual vectors as its columns, and is given by:

$$R = \begin{bmatrix} r_1 & \cdots & r_m \end{bmatrix}$$

A candidate set 108 of monitoring points 106 is a subset of all the nodes 104 in the network 100. The desired size of this subset is chosen to reflect the circumstances of a given situation, such as the available number of thermometers 32 for installation in the network, the budget and time available for installation, and other economic and technical considerations. In this way the number of monitoring points constituting the "optimal set" may be constrained.

The method for determining the ability of a candidate set to accurately determine the locations of a given source of anomalous flow will now be described.

A candidate set is represented by $q$, a binary vector of length $m$. If a thermometer 32 is present at node $i$, then $q_i = 1$, otherwise $q_i = 0$. The sum of all elements $q_i$ must be equal to the number of desired monitoring points. Referring to Figure 5, thermometers 32 are present at monitoring points 106 corresponding to nodes 104C, 104G, and 104J. Therefore, for the candidate set 108 of Figure 5, $q = \{0,0,1,0,0,0,1,0,0,1,0\}$.

A diagonal $m \times m$ matrix $Q(q)$ is constructed from vector $q$, where

$$Q_{ij}(q) = \begin{cases} q_i & \text{if } i = j \\ 0 & \text{otherwise} \end{cases}$$

A set of values referred to as "similarity" is then calculated. A similarity between simulated anomalous flows in nodes $k$ and node $j$, of the nodes 104, where temperature is measured at a set 108 of candidate monitoring points 106 represented by vector $q$, is calculated by taking the normalised projection of the vectors $Q(q)r_k$ and $Q(q)s_j$ (i.e. the vectors $r_k$ and $s_j$, but with elements set to 0 if that node is not in the set 108 of candidate monitoring points 106). This normalised projection simplifies to:

$$\psi_{kj}(q) = \frac{r_k^T Q(q) s_j}{|Q(q)r_k||Q(q)s_j|}$$

Value $\psi_{kj}(q)$ is close to 1 if anomalous flows originating from nodes $k$ and $j$ produce similar residuals at the candidate set 108 of monitoring points 106.

A projection matrix is then constructed from the residual and sensitivity matrices. A projection matrix is a square matrix with a number of rows equal to the number of nodes 104 in the network. The projection matrix $\Psi(q)$ is an $m \times m$ matrix given by:

$$\Psi(q) = \begin{bmatrix} \psi_{11}(q) & \cdots & \psi_{1m}(q) \\ \vdots & \ddots & \vdots \\ \psi_{m1}(q) & \cdots & \psi_{mm}(q) \end{bmatrix}$$

Each element of the projection matrix is a number between zero and one that is a measure of similarity between the calculated differences in temperature, at the candidate set 107 of monitoring points 106, for a given difference of effect between a source of anomalous flow at one node (the index of the row) and a source of anomalous flow at another node (the index of the column). An element of the projection matrix is equal to one when leaks in two nodes 104 have the same measured effect on the network 100 as determined by the set 108 of monitoring points 106.

An error index $\varepsilon_i(q)$ is calculated for a candidate set 108 based on how well that set 108 of monitoring points 106 localises a simulated flow increase in node i of nodes 104. The error index is given by:

$$\varepsilon_i(q) = \begin{cases} \dfrac{d_i(q)}{d_{max}} & \text{if } d_i(q) < d_{max} \\ 1 & \text{otherwise} \end{cases}$$

Where matrix $d_i(q)$ is an array of distance values and comprises elements which correspond to distances between the "actual" leak node i, and the "predicted" leak node j that corresponds to the biggest projection value of that pair, denoted $\psi_{ij}(q)$ and given by:

$$\psi_{ij}(q) = max(\psi_{i1}(q) \quad \cdots \quad \psi_{im}(q))$$

In one embodiment, the distance between two adjacent nodes is set to 1 such that, for example, the distance between nodes 104A and 104B is 1 and the distance between nodes 104A and 104K is 4. In another embodiment, the distances may be chosen to more closely resemble real distances between the nodes 104 of the network 100.

$d_{max}$ is a cut-off distance, above which $\varepsilon_i(q) = 1$, and is given by:

$$d_{max} = \frac{1}{2}\sqrt{m}$$

A lower error index is assigned when the "predicted" and "actual" leak nodes are closer together. $\varepsilon_i(q) = 0$ when they are the same node.

An error score, denoted $\bar{\varepsilon}$, for a set 108 of candidate monitoring points 106 is then calculated from the average of the error index for all nodes in the network, using the following formula:

$$\bar{\varepsilon} = \sum_{i=1}^{m} \frac{\varepsilon_i(q)}{m}$$

The error score describes a predicted ability of that set 108 of monitoring points 106 to accurately determine a location L of an anomalous flow in the network 100, wherever that anomalous flow may be in reality. An error score of zero is assigned to a set 108 of monitoring points 106 if the maximum value of each row of the projection matrix corresponds to an increase in demand in the node corresponding to that row. An error score of less than one is assigned when not all anomalous flows are perfectly isolable, that is where there is an ambiguity in the actual location L of a source of anomalous flow. For a plurality of candidate sets, the set with the lowest error score is deemed the optimal set. Once an optimal candidate set has been identified, thermometers are installed at locations in the network 100 corresponding to the nodes of the model at which the monitoring points of the optimal set are located.

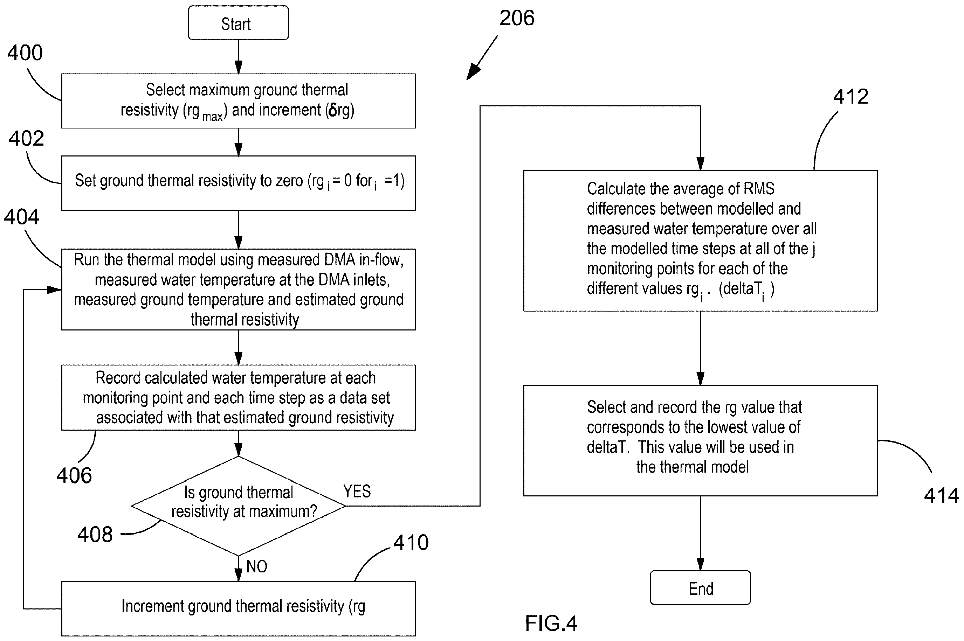

Referring to Figures 1, 2 and 4, the thermal model is then calibrated 206 using measurements of the flow into the network 10 (known as the district metered area in-flow), measured water temperature at the inlet meter 20, and measured ground temperatures. Step 206 of Figure 2 comprises the steps of Figure 4.

The thermal resistivity of the ground 34 in the model is set to zero 402 and incremented at set amounts up to a maximum resistivity 410. For each value of resistivity, the temperature of water in the model at each monitoring point 24 is calculated 404 and recorded 406 over all time steps for which the model is run.

Temperatures at each monitoring point 24 of the network are also measured and recorded.

Once the model has been run at maximum resistivity 408, root-mean-square differences between the calculated temperatures and measured temperatures are determined and subsequently averaged 412. Additionally, or alternatively to root-mean-square differences, mean absolute differences may be calculated and subsequently averaged. The averaging is performed over calculated temperatures of all the measuring points 24 and over all the time steps for which the model was run.

The ground thermal resistivity value used in the model which yields the lowest value of the set of averages is the calibrated thermal resistivity to be used in the model as the ground thermal resistivity in subsequent steps 414.

Once a calibrated thermal resistivity has been determined 206, then for the chosen value of resistivity, differences between calculated and measured temperatures at each monitoring point 24 at each time step are compared to a pre-determined threshold value.

Additionally, or alternatively, for that value of resistivity, an average deviation between calculated and measured values over all time steps at each monitoring point 24 is calculated. The step of calculating the average may include calculating the root-mean-square or absolute value of each difference. The average values are compared to a further pre-determined value.

The pre-determined threshold values may be in the region of 0.1 degrees Celsius to 1.0 degrees Celsius, depending on how sensitive a user of the method may desire the anomalous flow detection to be. The predetermined values do not have to be the same.

At step 208, if no comparison exceeds a predetermined value, then a good calibration is deemed to have been achieved and the temperatures at the monitoring points 24 are monitored 216. If one or more comparisons yields a value exceeding a predetermined value, then the following steps are carried out to determine the location of one or more sources of anomalous flow which may be the cause of the one or more discrepancies.

The status of any valves 18 present in the network 10 is checked to determine whether any valve 18 is open when the model records that valve as shut, and vice versa 210. If any such discrepancy is found, the model is appropriately altered to reflect the reality of the network 10 and the steps described above are repeated to achieve a more accurate result.

If the status of the valves 18 in the network 10 matches the status of the valves 18 in the model, then a sequence of allocations and re-runs of the model are performed 212, as described in detail below with reference to Figures 2 and 5.

A leakage demand is allocated to a first node 14 of the model and the model is run to predict the consequent change in thermal behaviour of the network 10. In other words, a first guess is made at where the source of an anomalous flow might be in view of one or more of the comparisons above exceeding a predetermined value, the guess is inserted into the model as an artificially increased demand at a first node 14, and the effect of the increased demand on the model is compared to the thermal behaviour of the network 10.

The leakage demand is allocated to each other node 14 of the model in turn and the model is run for each allocation. In other words, guesses are made that the source of anomalous flow might be coming from each node.

For each run of the model, that is for each guess made as to the source of the anomalous flow, a set of calculated temperatures over a set of time steps or increments at each monitoring point 24 is generated. In one embodiment, the guesses correspond to each node 14 of the model in turn. In other embodiments, the guesses might comprise allocating the anomalous flow demand across more than one node 14 in one or more run of the model. The more permutations of anomalous flow allocation, the longer the generation of the set of calculated temperatures takes on a computer of given power, but the more accurate the prediction of the source of the anomalous flow.

The set of calculated temperatures is denoted $TC_{klm}$. The set of measured temperatures is denoted $TM_{kl}$. Subscript $k$ refers to the set of time steps over which the model is run and at which the measured temperatures are recorded, subscript $l$ refers to the set of monitoring points 24 at which temperature measurements are made, and subscript $m$ refers to the set of nodes 14 over which allocations of the anomalous flow demand are made in the model.

The differences $\delta T_{klm}$ between the calculated temperatures $TC_{klm}$ and the corresponding measured temperatures $TM_{kl}$ are recorded for each time step, each monitoring point 24 and each allocation of the leakage demand to a node 14. In other words, the following set of differences is calculated:

$$\delta T_{klm} = TC_{klm} - TM_{kl}.$$

Next, an indicator of agreement between the measured temperatures and the calculated temperatures is calculated. In one embodiment, the square root of the sum of the squares of the differences $\delta T_{klm}$ between the calculated temperatures $TC_{klm}$ and the corresponding measured temperatures $TM_{kl}$ over all monitoring points 24 and time steps for each demand allocation is calculated, as follows:

$$\Delta T_m = \sqrt{\sum_k \sum_l (\delta T_{k\,l\,m})^2}$$

In another embodiment, the mean absolute value of the differences is calculated rather than the root-mean-square. The specific function used is not critical to the invention. Using root-mean-square emphasises the effect of the biggest differences in temperature, which increases sensitivity to changes at low demand times, rather than using mean absolute values, which increases the contribution to the calculated mean of changes at peak demand times.

The node where the difference $\Delta T$ is a minimum is selected for search as the most likely candidate for the source of the anomalous flow.

The area in the network 10 that corresponds to the area immediately around that node is then searched for the source of the anomalous flow 214. If the source is not found, the node with the next lowest value of $\Delta T$ is selected and the area in the network that corresponds to the area immediately around that node is searched in turn. This process is continued until the source of the anomalous flow is found. The source may be a leak, a valve in an unexpected status, or a customer consumption that is different to expectation.

If a source of the anomalous flow is found and identified as a leak, then the leak may be fixed and the model rerun 206 to achieve a good calibration characterised by agreement between calculated temperatures and measured temperatures. If a source of the anomalous flow is found and identified to be a valve in an unexpected status, or a customer consumption different to expectation, then the parameters of the model can be altered accordingly in light of this such that a run of the updated model results in a good calibration.

In another embodiment, whether or not a good calibration has been achieved, a search for a source of anomalous flow is prompted by a change in net in-flow into the network, where the change is greater than a minimum flow change of interest.

The net in-flow is monitored 218 at the one or more inlets 20 to the network 10. Once such a change is identified, the model is run without taking into account the in-flow change to produce results for a period of time before the in-flow change. In one embodiment, this time period is a twenty-four hour period before the in-flow change. Running the model generates a set of calculated water temperatures at each monitoring point 24. The set is denoted $TC_{pre\,kl}$, where subscript $k$ is the index for the time step and subscript $l$ refers to the monitoring points 24. Inputs to the model for this run include a measured flow rate at the one or more inlets 20 to the network 10 for that period of time and measured ground temperatures for that time period.

The model is run repeatedly with the measured change in in-flow allocated to each node 14 in the model in turn 220. Other inputs to the model during these runs include the one or more measured inlet temperatures, measured ground temperatures, and measured in-flow rates for a time period after the change in net in-flow as inputs. In one embodiment, this time period is twenty-four hours after the change. Running the model generates a set of temperatures $TC_{post\,klm}$, where subscript $k$ is the index for the time step, subscript $l$ is the index for the monitoring points 24, and subscript $m$ is the index for the nodes 14 to which the flow change is allocated.

The difference between calculated water temperatures (δTC) of the period of time before the flow change and of the time period after the flow change for each monitoring point 24 and for each time step is calculated as follows:

$$\delta TC_{k\,l\,m} = TC_{post\,k\,l\,m} - TC_{pre\,k\,l}.$$

The difference between measured temperatures (δTM) of the period of time before the flow change and of the time period after the flow change at each time step and each monitoring point 24 is calculated as follows:

$$\delta TM_{k\,l} = TM_{post\,k\,l} - TM_{pre\,k\,l}.$$

The square root of the sum of the squares of the differences between δTC and δTM over all monitoring points 24 and time steps for each flow change allocation is calculated as follows 222:

$$\nabla T_m = \sqrt{\sum_k \sum_l (\delta TC_{k\,l\,m} - \delta TM_{k\,l})^2}$$

Additionally, or alternatively, mean absolute differences are calculated.

The location in the network that corresponds to the node 14 with the lowest value of $\nabla T_m$ is searched in a first attempt to find the cause of the anomalous flow 224. If the cause is not found, locations corresponding to other nodes with the next lowest values of $\nabla T_m$ are progressively searched until the cause of the flow change is found.

It will be appreciated by persons skilled in the art that the above embodiments have been described by way of example only, and not in any limitative sense, and that various alterations and modifications are possible without departure from the scope of the invention as defined by the appended claims.

**Claims**

1. A method (200) for locating anomalous fluid flow (L) in a fluid distribution network (10, 100), the method comprising the steps of:

(i) allocating (212) a flow value representative of the anomalous fluid flow to at least one node (14, 104) of a computer-implemented model representative of the fluid distribution network;
(ii) determining (212) from the model calculated temperatures at a plurality of locations (24, 106) of the network based on the allocation of step (i);
(iii) comparing (212) the calculated temperatures with measured temperatures at the plurality of locations; and
(iv) based on the comparison, identifying at least one part of the network to search (214) for the anomalous fluid flow.

2. The method of claim 1, further comprising the steps of: calibrating (206) the model for thermal resistivity of ground (34) in which the network is installed; determining (406) from the calibrated model calculated temperatures at the plurality of locations; comparing the calculated temperatures with measured temperatures at the plurality of locations; and carrying out steps (i) to (iv) based on an outcome (208) of the comparison.

3. The method of claim 2, wherein the comparison comprises calculating at least one difference between at least one calculated value and at least one measured value and comparing the at least one difference to a predetermined threshold value.

4. The method of claim 3, wherein the calculation of the difference comprises calculating an average calculated value and an average measured value.

5. The method of any one of claims 2 to 4, wherein the predetermined threshold value is in the range 0.1 to 1.0 degrees Celsius.

6. The method of any one of claims 2 to 5, comprising the step of altering (210) a physical status of at least one portion (18) of the network based on the outcome of the comparison.

7. The method of any preceding claim, wherein the comparison of step (iv) provides a plurality of outcomes of the comparison and the method further comprises the steps of: ordering the outcomes based on a likelihood of a source of the anomalous flow (L) being in locations corresponding to respective outcomes to provide a ranking; and prioritising the parts of the network for search based on the ranking.

8. The method of any preceding claim, wherein the anomalous value is representative of a change in inflow into the network.

9. The method of claim 8, further comprising the following steps prior to step (iii):

(v) allocating (220) a flow value representative of normal demand to at least one node of the model; and
(vi) determining (222) from the model calculated temperatures at a plurality of locations of the network based on the allocation of step (v),

wherein the comparison of step (iii) comprises the calculated temperatures of steps (ii) and (vi) and respective measured values.

10. The method of claim 9, wherein the comparison comprises the steps of: calculating differences between the calculated values of steps (ii) and (vi) to obtain a set of calculated temperature differences; calculating differences between the respective measured values to obtain a set of measured temperature differences; comparing the calculated set and the measured set; and carrying out step (iv) based on the comparison of the two sets.

11. A method for identifying optimal locations of monitoring points (24, 106) in a fluid distribution network (10, 100), the method comprising the steps of:

(i) determining from a computer-implemented model representative of the fluid distribution network first calculated temperatures at a plurality of nodes (14, 104) of the network;
(ii) allocating to at least one node of the model a first flow value;
(iii) determining from the model second calculated temperatures at the plurality of nodes based on the allocation of step (ii);
(iv) allocating to at least one node of the model a second flow value;
(v) determining from the model third calculated temperatures at the plurality of nodes based on the allocation of step (iv);
(vi) calculating a plurality of values associated with a respective plurality of locations of monitoring points based on the first, second, and third calculated temperatures; and
(vii) selecting, based on the values, locations for monitoring points.

12. The method of claim 11, further comprising the step of installing temperature monitoring equipment (34) at the monitoring points of the optimal set.

13. The method of claim 11 or claim 12, wherein step (vi) comprises calculating error scores of each candidate set, wherein each error score is indicative of an ability of the respective candidate set to determine a location of a source of anomalous flow (L) in the network, and wherein the selection of step (vii) is based on the error scores.

14. The method of any one of claims 11 to 13, wherein step (i) comprises allocating to at least one node a flow value representative of a normal demand of the network.

15. A computer system configured to carry out a method according to any preceding claim.

DMA inlet — 20

12

18

32

26 — 30

14

16

22

24

Control Valve

DMA meter

Pipes with nodes at each end

Pipes outside DMA

Hydrant

Temperature monitoring point

Boundary valve

1km

10

34

28

EP 3 736 385 A1

FIG.1

Start

200 — Build hydraulic and thermal model of the system

202 — Find optimum temperature monitoring points to get best sensitivity to demand changes

204 — Measure temperatures at the monitoring points and record flows for calibration

206 — Calibrate the thermal model using adjustments in thermal conductivity

208 — Good thermal conductivity?

NO

Improve the calibration

210 — Check valve status in the real system vs model valve status

212 — Re-assign modelled demands to nodes in the model in an iterative process and identify node or nodes to which re-allocation of demand gives best agreement between measured temperatures and modelled temperatures

Search the equivalent locations in the real distribution system of the node or nodes for the causes of anomalous flows

214 —

YES

216 — Monitor temperatures at the monitoring points

218 — Monitor for changes in DMA net in-flow

FIG.2 (part i)

ii

```
When the DMA flow change happens,
model the expected step change in
temperature at each monitoring point          220
for the actual change in flow at each
           node in turn
```

```
Compare the modelled change in              222
temperature at each monitoring point
for each mode to the actual change.
Select the node or nodes where a
modelled flow change at those nodes
gives the best match to the measured
         flow change.
```

```
Search at the location corresponding to     224
the selected node or nodes for the cause
of the anomalous demand that has
caused that DMA flow change
```

End

FIG.2 (part ii)

FIG.3

EP 3 736 385 A1

```
                    ┌─────────┐
                    │  Start  │                    206
                    └────┬────┘                      ↘
  400                    │
   ↘   ┌─────────────────▼─────────────────┐
       │  Select maximum ground thermal    │                              412
       │  resistivity (rg max) and         │                                ↘
       │  increment (δrg)                  │
       └─────────────────┬─────────────────┘      ┌───────────────────────────────┐
  402                    │                         │ Calculate the average of RMS  │
   ↘   ┌─────────────────▼─────────────────┐       │ differences between modelled  │
       │  Set ground thermal resistivity   │       │ and measured water            │
       │  to zero (rg i = 0 for i =1)      │       │ temperature over all the      │
       └─────────────────┬─────────────────┘       │ modelled time steps at all of │
  404                    │                         │ the j monitoring points for   │
   ↘   ┌─────────────────▼─────────────────┐       │ each of the different values  │
       │  Run the thermal model using      │       │ rg i . (deltaT i )            │
       │  measured DMA in-flow, measured   │       └───────────────┬───────────────┘
       │  water temperature at the DMA     │                       │
       │  inlets, measured ground          │                       │
       │  temperature and estimated        │                       │
       │  ground thermal resistivity       │       ┌───────────────▼───────────────┐
       └─────────────────┬─────────────────┘       │ Select and record the rg value│
                         │                         │ that corresponds to the lowest│
       ┌─────────────────▼─────────────────┐       │ value of deltaT.  This value  │
       │  Record calculated water          │       │ will be used in the thermal   │
       │  temperature at each monitoring   │       │ model                         │
       │  point and each time step as a    │       └───────────────┬───────────────┘
       │  data set associated with that    │                       │           414
       │  estimated ground resistivity     │                       │             ↘
       └─────────────────┬─────────────────┘                       │
  406                    │                                         │
              ┌──────────▼──────────┐    YES                       │
              ╱  Is ground thermal  ╲──────────────────────────────┘
              ╲  resistivity at      ╱                ┌─────────┐
    408 ──────╲  maximum?           ╱                │   End   │
              └──────────┬──────────┘                └─────────┘
                         │ NO              410
       ┌─────────────────▼─────────────────┐ ↙
       │  Increment ground thermal         │
       │  resistivity (rg                  │
       └───────────────────────────────────┘
```

FIG.4

FIG.5

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

Application Number

EP 19 17 3583

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 546 018 A (FLOWGEM LTD [GB]) 5 July 2017 (2017-07-05) * pages 1-23; figures 1, 5-8 * | 1-10,15 | INV. E03B7/02 E03B7/07 |
| A | WO 2016/124931 A1 (INVENIO SYSTEMS LTD [GB]; TOOMS MOORE CONSULTING LTD [GB] ET AL.) 11 August 2016 (2016-08-11) * pages 15-59; figures 3-22 * | 1-10,15 | |
| A | GB 2 568 058 A (INVENIO SYSTEMS LTD [GB]) 8 May 2019 (2019-05-08) * pages 1-10; figures 1-16 * | 1-10,15 | |
| A | WO 2018/104738 A1 (OMNIA KLENZ LTD [GB]) 14 June 2018 (2018-06-14) * pages 1-16; figures 1-8 * | 1-10,15 | |

TECHNICAL FIELDS
SEARCHED    (IPC)

E03B

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 12 December 2019 | Posavec, Daniel |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

........................................................................
& : member of the same patent family, corresponding
     document

EPO FORM 1503 03.82 (P04E07)

Europäisches
Patentamt

European
Patent Office

Office européen
des brevets

**INCOMPLETE SEARCH
SHEET C**

Claim(s) completely searchable:
        1-10, 15

Claim(s) not searched:
        11-14

Reason for the limitation of the search:

The search has been restricted to the subject-matter indicated by the applicant in their letter of 05-12-2019 filed in reply to the invitation pursuant to Rule 62a(1).

## ANNEX TO THE EUROPEAN SEARCH REPORT
## ON EUROPEAN PATENT APPLICATION NO.

EP 19 17 3583

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2019

| Patent document cited in search report | | Publication date | Patent family member(s) | | Publication date |
|---|---|---|---|---|---|
| GB 2546018 | A | 05-07-2017 | GB | 2536364 A | 14-09-2016 |
| | | | GB | 2545830 A | 28-06-2017 |
| | | | GB | 2546018 A | 05-07-2017 |
| WO 2016124931 | A1 | 11-08-2016 | AU | 2016214124 A1 | 28-09-2017 |
| | | | CA | 2975757 A1 | 11-08-2016 |
| | | | CN | 107636440 A | 26-01-2018 |
| | | | EP | 3254076 A1 | 13-12-2017 |
| | | | GB | 2537013 A | 05-10-2016 |
| | | | US | 2018031439 A1 | 01-02-2018 |
| | | | WO | 2016124931 A1 | 11-08-2016 |
| GB 2568058 | A | 08-05-2019 | GB | 2568058 A | 08-05-2019 |
| | | | WO | 2019086875 A1 | 09-05-2019 |
| WO 2018104738 | A1 | 14-06-2018 | NONE | | |

EPO FORM P0459

For more details about this annex : see Official Journal of the European Patent Office, No. 12/82